# EUROPEAN PATENT APPLICATION

(11) **EP 2 431 796 A1**
(43) Date of publication of application: **21.03.2012**
(21) Application number: 10789311.7
(22) Date of filing: 21.04.2010
(51) Int. Cl.: G02F 1/1333, F21S 2/00, G02F 1/13357, H04N 5/66, F21Y 103/00

(54) **DISPLAY DEVICE AND TELEVISION RECEIVER**

(30) Priority: 17.06.2009 JP 2009144370
(71) Applicant: Sharp Kabushiki Kaisha, Osaka-shi, Osaka 545-8522 (JP)
(72) Inventor: YOKOTA, Masashi, Osaka-shi OSAKA 545-8522 (JP)
(74) Representative: Rocke, Carsten
(86) International application number: PCT/JP2010/057042
(87) International publication number: WO 2010/146934

(57) **Abstract**

The present invention provides a display device that can be provided as a final product such as a television receiver simply by assembling a display panel and a backlight and is excellent in workability in assembling the panel to the backlight while securing a wide effective display region. A display device 100 according to the present invention includes a light source 50, a display panel 11, a first cabinet Ca, and a second cabinet Cb. The display panel 11 is configured to provide display using light from the light source 50. The display panel 11 is attached to the first cabinet Ca. The light source 50 is attached to the second cabinet Cb. The first cabinet Ca and the second cabinet Cb are engaged with each other. The first cabinet Ca and the second cabinet Cb are configured as an outer case that constitutes an exterior of the display device 100.

## Description

### TECHNICAL FIELD

The present invention relates to a display device and a television receiver.

### BACKGROUND ART

For example, a liquid crystal panel used for a liquid crystal display device such as a liquid crystal television does not spontaneously emit light. Therefore, a backlight is separately required as an illumination device. A liquid crystal display device described in Patent Literature 1 has a configuration in which a backlight includes a chassis that houses plural cold-cathode tubes and a frame for aligning an optical member in the chassis and the backlight and a liquid crystal panel are maintained in an assembled state by a bezel that covers the liquid crystal panel from the front side. The liquid crystal display device is held between both front and rear cabinets to configure a television receiver. In other words, as clearly indicated in Patent Document 1, the liquid crystal panel and the backlight are separately manufactured and assembled with each other using the bezel or the like to manufacture the liquid crystal display device. The liquid crystal display device is held between a pair of cabinets to manufacture a television receiver.

### [Prior Art Document]

### [Patent Document]

Patent Document 1: Japanese Patent Laid-Open No. 2008-293711

### Problem to be Solved by the Invention

In the technique of Patent Document 1, the liquid crystal panel and the backlight are separately manufactured, assembled in a separate process, and housed in the cabinets in another separate process to configure the television receiver. However, such a method is not always an efficient method because the number of processes increases.
In the technique of Patent Literature 1, the liquid crystal panel is assembled to the backlight by the bezel. However, for example, when the liquid crystal panel is directly placed on the backlight and then assembled by the bezel, if a portion where the liquid crystal panel is placed is secured wide, an effective display region of the liquid crystal panel is reduced. Therefore, it is necessary to secure the placing portion narrow. However, placing the liquid crystal panel in the narrow portion has a problem in that workability is low compared with placing the liquid crystal panel in the wide portion.

### DISCLOSURE OF THE PRESENT INVENTION

The present invention has been devised in view of the above problems and it is an object of the present invention to provide a display device that can be provided as a final product such as a television receiver simply by assembling a display panel (a component including a panel) and a backlight (a component including a light source) and is excellent in workability in assembling the panel to the backlight while securing a wide effective display region. It is also an object of the present invention to provide a television receiver including such a display device.

### Means for Solving the Problem

In order to solve the problems, a display device according to the present invention includes a light source, a display panel, a first cabinet, a second cabinet. The display panel is configured to provide display using light from the light source. The display panel is attached to the first cabinet. The light source is attached to the second cabinet. The first cabinet and the second cabinet are engaged with each other. The first cabinet and the second cabinet are configured as an outer case that forms an exterior of the display device.

With the configuration explained above, since the display panel is attached to the first cabinet and the light source is attached to the second cabinet, it could be possible to realize a display function of the display panel, which makes use of the light from the light source, by engaging the cabinets. The first cabinet and the second cabinet configure the outer case that forms the exterior of the display device. Therefore, it is possible to provide the display device as a final product such as a television receiver simply by engaging the first cabinet and the second cabinet.
In particular, according to the present invention, an attachment member such as a bezel between the display panel (a component including a panel) and the backlight (a component including a light source) is not required. Therefore, material cost can be reduced. The number of assembly processes is reduced compared with the number of assembly processes in the past for assembling the display panel (the component including the panel) and the backlight (the component including the light source) and then housing the display panel and the backlight in a separate cabinet to provide a final product such as a television receiver. In this regard, the cost can be reduced.
Alignment of the display panel (the component including the panel) and the backlight (the component including the light source) in the past is realized by assembling of the first cabinet and the second cabinet. Therefore, workability of the alignment is improved. It is unnecessary to secure a region for alignment in the display panel. Therefore, it is possible to easily perform the alignment without involving a situation in which an effective display region of the display panel is reduced.

In the configuration explained above, the first cabinet may be a frame, and the display panel may be arranged such that a display surface thereof is in the frame.
In this case, the display surface of the display panel is prepared simply by engaging the first cabinet and the second cabinet, and provided as a final product such as a television receiver.

The first cabinet may include an elastically deformable claw section. The display panel may be locked by the claw section.
When display panel is locked by the elastically deformable claw section in this way, it is possible to attach and detach the display panel making use of elastic deformation of the claw section. It is possible to more surely lock the display panel by elastically deforming the claw section in a direction in which force for locking the display panel is increased.

The second cabinet may include a bottom surface and a wall section rising from the bottom surface. The light source may be attached to the bottom surface.
It is possible to secure a large distance between the display panel and the light source by attaching the light source to the bottom surface in this way. Consequently, it is possible to eliminate unevenness of the light emitted from the light source.

A driving power supply board configured to supply driving power to the light source may be arranged on the inner side of the second cabinet.
Since the first cabinet and the second cabinet configure the outer case that forms the exterior of the display device, it is undesirable in design and in safety to arrange the driving power supply board for supplying driving power on the outer side of the first cabinet and the second cabinet. Therefore, the driving power supply board is arranged on the inner side of the second cabinet, to which the light source is attached, to eliminate problems in design and in safety and realize simplification of wires and the like related to power supply.

The display device may further include an optical sheet configured to diffuse the light from the light source. The optical sheet may be held by the first cabinet and the second cabinet.
If the optical sheet is held by the first cabinet and the second cabinet in this way, it is possible to reduce unevenness of the light emitted from the light source. Moreover, since a member for attaching the optical sheet is not separately necessary, the configuration is simplified.

The display device may further include an optical sheet configured to diffuse the light from the light source. The optical sheet may be held by the first cabinet.
If the optical sheet is held by the first cabinet, it is possible to reduce unevenness of the light emitted from the light source. Moreover, it is possible to secure a large distance between the optical sheet and the light source. Consequently, it is possible to more suitably eliminate unevenness of the light emitted from the light source.

The second cabinet may have a projection that projects to the first cabinet side. The first cabinet may have a claw section and a projection housing section that houses the projection. The claw section locks the display panel. The projection housing section is formed on the opposite side of the claw section to a side where the display panel is locked. The projection housed in the projection housing section may press the claw section to the display panel side.
If the claw section is pressed to the display panel side by the projection of the second cabinet in this way, it is possible to make the lock of the display panel firmer and it is possible to reduce wobbles and misalignment of the display panel.

The first cabinet may include a plurality of first holding members, which are for holding the optical sheet, are formed in the same plane. The claw section is formed between adjacent ones of the first holding members. The second cabinet may include a second holding member that holds the optical sheet between the second holding member and the first holding member.
With such a configuration, it is possible to collectively realize locking of the display panel, holding of the optical sheet, and prevention of misalignment of the display panel by the projection. In other words, in the first cabinet, since the claw section that locks the display panel is formed between the adjacent first holding members, the first holding members and the claw section (and the projection) do not overlap each other. Therefore, it is possible to suitably realize locking of the display panel by the claw section, holding of the optical sheet by the holding members, and prevention of misalignment of the display panel by the projection.

The projection can regulate the movement of the optical sheet in a surface direction.
If the movement of the optical sheet in the surface direction is regulated by the projection in addition to the prevention of misalignment of the display panel, since it is unnecessary to separately provide a regulating member for the optical sheet, the configuration is simplified.

The second cabinet can include a bottom surface to which the light source is attached. The light source may be arranged in one region of the bottom surface. The driving power supply is arranged in another region of the bottom surface different from the region in which the light source is arranged on the inner side of the second cabinet.
It is possible to suitably arrange the driving power supply board on the inner side of the second cabinet by arranging the driving power supply board in the region in which the light source is not arranged in this way.

A liquid crystal panel is an example of the display panel. Such a display device can be applied to various uses such as a television and a desktop screen of a personal computer as a liquid crystal display device. In particular, the display device is suitable as an ultrathin television receiver.

### Advantageous Effects of Invention

According to the present invention, it is possible to provide a display device that can be provided as a final product such as a television receiver simply by assembling a display panel and a backlight and is excellent in workability in assembling the panel to the backlight while securing a wide effective display region. It is possible to provide a television receiver including such a display device.

### BRIEF DESCRIPTION OF THE DRAWINGS

FIG. 1 is a disassembled perspective view showing a schematic configuration of a television receiver according to a first embodiment of the present invention.
FIG. 2 is a sectional schematic view showing the configuration of a liquid crystal display device included in the television receiver shown in FIG. 1.
FIG. 3 is a plan schematic view showing an assembly relation between a liquid crystal panel and an optical sheet in the liquid crystal display device shown in FIG. 2.
FIG. 4 is a schematic diagram showing a mode of attaching the liquid crystal panel to a first cabinet in the first embodiment.
FIG. 5 is a schematic diagram showing a mode of placing an optical sheet on a second cabinet in the first embodiment.
FIG. 6 is a schematic diagram showing a mode of assembling the first cabinet and the second cabinet in the first embodiment.
FIG. 7 is a sectional schematic view showing the configuration of a liquid crystal display device according to a second embodiment.
FIG. 8 is a plan schematic view showing an assembly relation between a liquid crystal panel and an optical sheet in the liquid crystal display device shown in FIG. 7.
FIG. 9 is a schematic diagram showing a mode of attaching the liquid crystal panel and the optical sheet to the first cabinet in the second embodiment.
FIG. 10 is a schematic diagram showing a mode of assembling the first cabinet and a second cabinet in the second embodiment.
FIG. 11 is a sectional schematic view showing a modification of the liquid crystal display device according to the first embodiment.
FIG. 12 is a sectional schematic view showing a modification of the liquid crystal display device according to the second embodiment.

### MODE FOR CARRYING OUT THE INVENTION

### <First Embodiment>

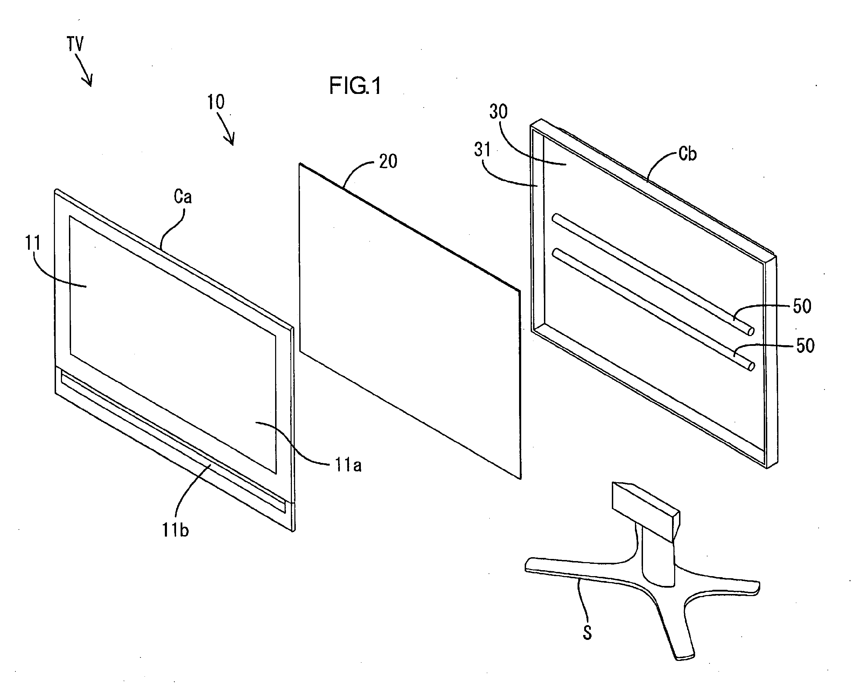

A first embodiment embodying the present invention is explained with reference to the drawings.
A television receiver TV shown in FIG. 1 includes a liquid crystal display device 10, a stand S for placing the liquid crystal display device 10, a not-shown power supply, and a not-shown tuner.

The liquid crystal display device (a display device) 10 is formed in a square shape long in sideways as a whole and supported by the stand S in an upright state. Specifically, the exterior of the liquid crystal display device 10 is configured by a first cabinet Ca and a second cabinet Cb having a lateral rectangular shape. The first cabinet Ca and the second cabinet Cb are engaged to configure an outer case of the liquid crystal display device 10.

The first cabinet Ca is formed of a frame-like resin member. A liquid crystal panel (the display panel) 11 is attached to the first cabinet Ca to be housed in the frame. A display surface 11a of the liquid crystal panel 11 is arranged in the frame. A speaker 11b and the like are provided on the surface side of the first cabinet Ca. On the other hand, the second cabinet Cb is formed of a box-like resin member having an opening and includes a bottom surface 30 that forms a box bottom and a wall section 31 vertically provided from the bottom surface 30. Hot-cathode tubes 50 are attached to the bottom surface 30.

The liquid crystal display device 10 has a configuration in which the second cabinet Cb is attached on the opposite side of the display surface 11a of the liquid crystal panel 11 with respect to the first cabinet Ca and light is supplied from the hot-cathode tubes 50 of the second cabinet Cb to the liquid crystal panel 11. An optical sheet 20 such as a diffuser is arranged between the first cabinet Ca and the second cabinet Cb, specifically, between the liquid crystal panel 11 and the hot-cathode tubes 50 and diffuses the light from the hot-cathode tubes 50 in a planar shape.

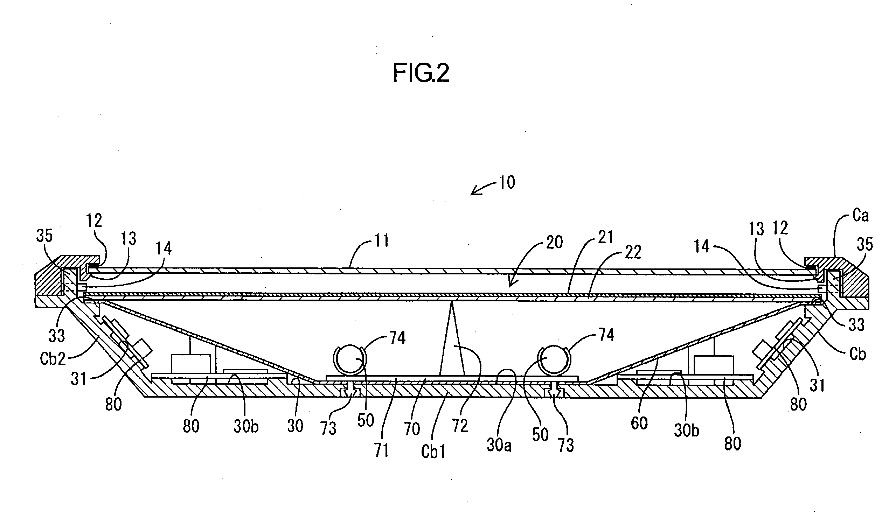

The liquid crystal panel 11 has a configuration in which a pair of glass substrates are bonded with a predetermined gap apart from each other and liquid crystal is filled between the glass substrates. On one glass substrate, a switching element (e.g., TFT) connected to a source wire and a gate wire orthogonal to each other, a pixel electrode connected to the switching element, an oriented film, and the like are provided. On the other glass substrate, a color filter on which colored sections of R (red), G (green), B (blue), and the like are arranged in a predetermined array, a counter electrode, an oriented film, and the like are provided. Sheet polarizers are arranged on the outer sides of both the substrates. As shown in FIG. 2, the optical sheet 20 is configured to include a diffuser 22 having large thickness on the second cabinet Cb side and include a diffusing lens and sheets 21 such as a reflective polarizing sheet having small thickness on the first cabinet Ca side.

The configuration of the first cabinet Ca and the second cabinet Cb and assembling of the first cabinet Ca and the second cabinet Cb are explained.

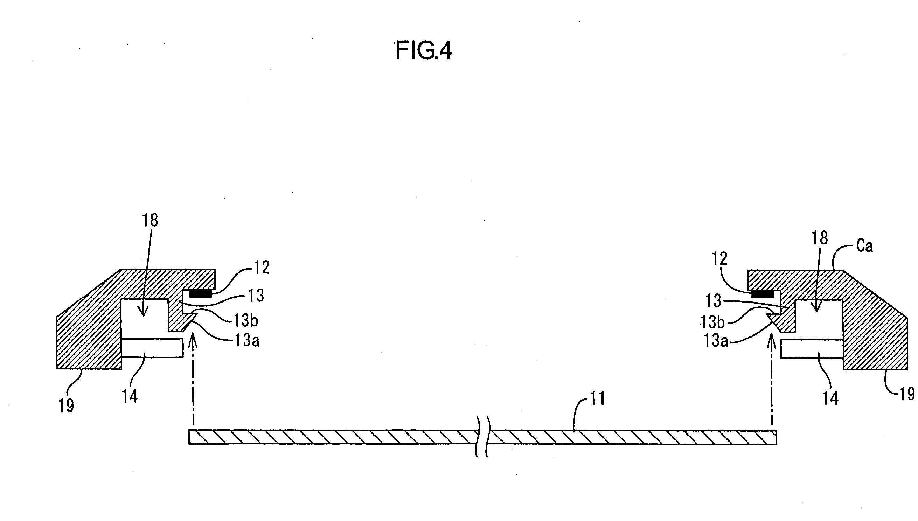

As shown in FIG. 2, the first cabinet Ca includes a claw section 13 for locking the liquid crystal panel 11. As shown in FIG. 4, the claw section 13 includes a locking surface 13b. The claw section 13 holds the liquid crystal panel 11 between the locking surface 13b and an elastic member (such as PORON®) 12 arranged to be opposed to the locking surface 13b. The claw section 13 itself is elastically deformable. As shown in FIG. 4, the claw section 13 is configured to be elastically deformed in a direction in which the claw section 13 widens (to the outer side) when the liquid crystal panel 11 is attached to the first cabinet Ca and elastically deformed in a direction in which the liquid crystal panel 11 is tightened (to the inner side) after the liquid crystal panel 11 is attached (details are explained later).

A slope 13a is provided in the claw section 13 of the first cabinet Ca to make it possible to, while guiding the liquid crystal panel 11 in a pressing direction (an arrow direction in FIG. 4), elastically deform the claw section 13 according to the pressing when the liquid crystal panel 11 is housed in the locking surface 13b of the claw section 13. On the rear side of the claw section 13, i.e., on the opposite side of a side where the liquid crystal panel 11 is locked, a projection housing section 18 for housing a projection for projection 35 of the second cabinet Cb explained later is formed.

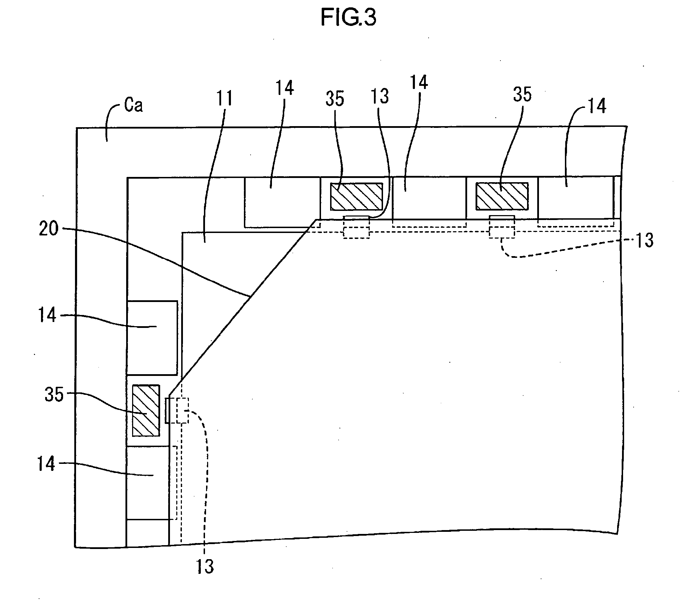

In the first cabinet Ca, a holding piece (a first holding member) 14 for holding an optical sheet 20 is formed. As shown in FIG. 3, a plurality of holding pieces 14 are formed in the same plane. The holding pieces 14, 14 and claw sections 13, 13 are arranged such that the claw section 13 is located between the adjacent holding pieces 14, 14 in plan view. In other words, the holding piece 14 and the claw section 13 are arranged not to overlap each other in plan view.

On the other hand, as shown in FIG. 2, the second cabinet Cb includes a bottom plate Cb1 that forms the bottom surface 30 and a wall plate Cb2 that forms the wall section 31. The wall section 31 is arranged to tilt at a predetermined angle with respect to the bottom surface 30.

In the bottom plate Cb1, two hot-cathode tubes 50 are attached on the bottom surface 30 thereof via a lamp clip 70. The reflection sheet 60 for reflecting light emitted from the hot-cathode tubes 50 to the inner surface of the second cabinet Cb is laid on the bottom surface 30. The hot-cathode tubes 50 are formed as a liner light source assuming a slender tube shape. The hot-cathode tubes 50 are arranged on the bottom surface 30 in a state in which a length direction (an axial direction) thereof is matched with a long side direction of the second cabinet Cb and the two hot-cathode tubes 50 are arranged in parallel to each other.

The reflection sheet 60 is made of synthetic resin. The surface of the reflection sheet 60 is colored in white excellent in light reflection properties. The reflection sheet 60 is laid to cover substantially the entire region of the inner surface of the second cabinet Cb along the inner surface. Specifically, in addition to a bottom section laid along the bottom surface 30, the reflection sheet 60 includes a tilting section tilting to extend along the wall section 31 (an angle of which is slightly different from the angle of the wall section 31). The reflection sheet 60 can orient light reflected by the tilting section to the inner side (the center side of the display device). A circuit board 80 such as a driving power supply board for supplying driving power to the hot-cathode tubes 50 is arranged in a region 30b different from a region 30a where the hot-cathode tubes 50 are arranged in the bottom surface 30 of the bottom plate Cb1.

The lamp clip 70 includes a plate section 71 applied to the bottom surface 30 of the bottom plate Cb1, a support pin 72 that projects from the plate section 71 to the optical sheet 20 side and supports the optical sheet 20, a light source holding section 74 that also projects from the plate section 71 to the optical sheet 20 side and holds the hot-cathode tubes 50, and a locking section 73 that projects from the plate section 71 to the bottom plate Cb1 side and attaches the lamp clip 70 to the bottom plate Cb1.

The circuit board 80 is also arranged on the inner surface of the wall plate Cb2 (the wall section 31). A video control board or the like for controlling a video in the television receiver TV is arranged. It is also possible to arrange a driving power supply board same as the driving power supply board explained above.

A sheets holding section (a second holding member) 33 for placing the reflection sheet 60 and the optical sheet 20 is formed at the top portion of the wall section 31. A projection 35 projecting to the first cabinet Ca side is formed on a placing surface of the sheets holding section 33. The sheets holding section 33 holds the optical sheet 20 between the sheets holding section 33 and the holding piece 14 of the first cabinet Ca. The projection 35 regulates the movement of the optical sheet 20 in a surface direction on the inner side of the projection 35. As explained above, the projection 35 is housed in the projection housing section 18 arranged on the rear side (the outer side) of the claw section 13 of the first cabinet Ca. The projection 35 urges the claw section 13 to the liquid crystal panel 11 side (the inner side) from the rear side (the outer side) (also see FIG. 3).

A method of assembling the liquid crystal display device 10 according to this embodiment is explained.
First, the liquid crystal panel 11 is attached to the first cabinet Ca. In other words, the liquid crystal panel 11, which is separately manufactured, is attached to the claw section 13 of the first cabinet Ca. However, as shown in FIG. 4, the liquid crystal panel 11 is pushed against the slope 13a of the claw section 13 (in an arrow direction) from the rear side of the first cabinet Ca to elastically deform the claw section 13 in the widening direction (the outer side) and house the liquid crystal panel 11 between the locking surface 13b and the elastic member 12. When the liquid crystal panel 11 is housed between the locking surface 13b and the elastic member 12, the claw section 13 elastically returns and the liquid crystal panel 11 is prevented or suppressed from dropping from between the locking surface 13b and the elastic member 12.

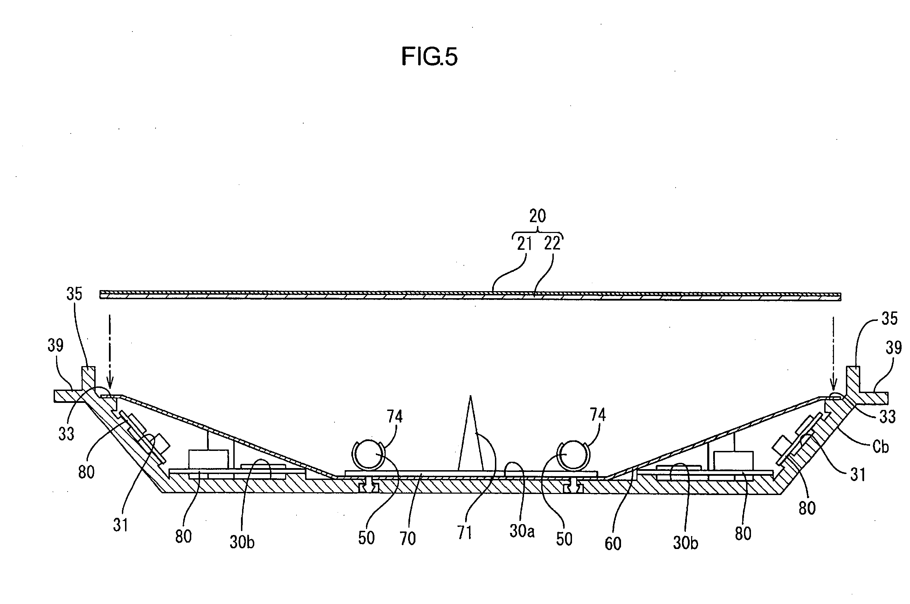

On the other hand, the optical sheet 20 is placed on the second cabinet Cb. Specifically, as shown in FIG. 5, the optical sheet 20 is placed in a region surrounded by projections 35, i.e., on the sheets holding section 33.

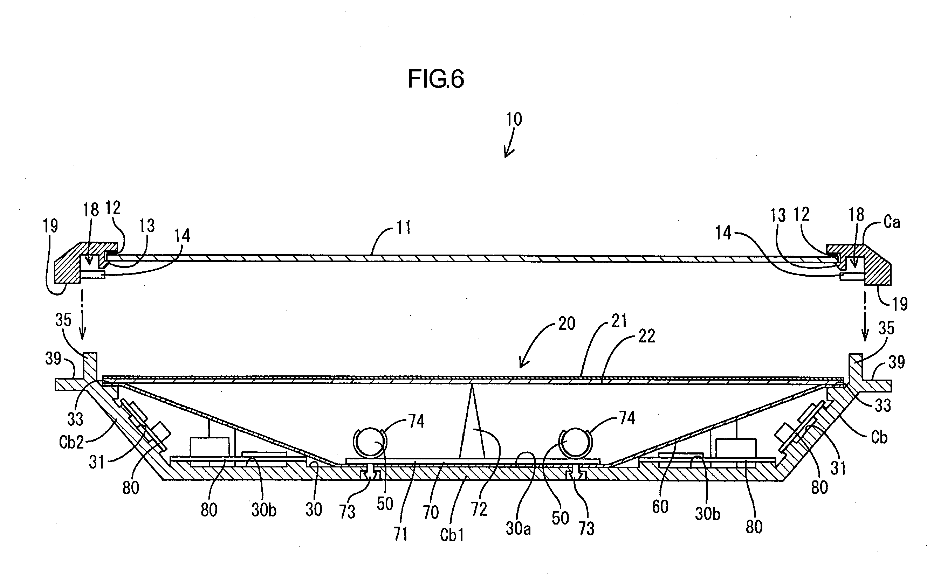

As shown in FIG. 6, the first cabinet Ca and the second cabinet Cb are assembled with the attachment surfaces 19 and 39 thereof opposed to each other and such that the projection 35 is housed in the projection housing section 18 of the first cabinet Ca. According to the assembling, the optical sheet 20 is held between the holding pieces 14 of the first cabinet Ca and the sheets holding section 22 of the second cabinet Cb.
The liquid crystal display device 10 is completed according to such engagement of the first cabinet Ca and the second cabinet Cb. The liquid crystal display device 10 is supported by the stand S (see FIG. 1), whereby the television receiver TV is provided.

With the television receiver TV according to this embodiment explained above, in the liquid crystal display device 10 thereof, the liquid crystal panel 11 is attached to the first cabinet Ca and the hot-cathode tubes 50 are attached to the second cabinet Cb. Therefore, it is possible to realize a display function of the liquid crystal panel 11, which makes use of the light from the hot-cathode tubes 50, by engaging the cabinets Ca and Cb.

The first cabinet Ca and the second cabinet Cb configure the outer case that forms the exterior of the liquid crystal display device 10. Therefore, it is possible to provide the liquid crystal display device 10 as a final product such as the television receiver TV simply by engaging the first cabinet Ca and the second cabinet Cb. In particular, in this embodiment, since an attachment member such as a bezel is disused, a reduction in material cost is realized. The number of assembly processes is reduced compared with, for example, the number of assembly processes for assembling a display panel and a backlight device and then housing the display panel and the backlight device in a separate cabinet to provide a final product such as a television receiver. In this regard, a cost reduction is also realized.

Alignment of the liquid crystal panel 10 with respect to a backlight device (the second cabinet Cb) is realized by engagement of the first cabinet Ca and the second cabinet Cb. Therefore, workability of the alignment is improved. It is unnecessary to secure a region for alignment in the liquid crystal panel 11. Therefore, it is possible to easily perform the alignment without involving a situation in which an effective display region of the liquid crystal panel 11 is reduced.

The first cabinet Ca is formed in a frame shape and the display surface 11a of the liquid crystal panel 11 is arranged in the frame. Therefore, it is possible to configure the display surface 11a of the liquid crystal panel 11 and provide a final product such as a television receiver simply by engaging the first cabinet Ca and the second cabinet Cb.

In the first cabinet Ca, the liquid crystal panel 11 is locked by the elastically deformable claw section 13. Therefore, it is possible to attach and detach the liquid crystal panel 11 making use of elastic deformation of the claw section 13. Since the claw section 13 is elastically deformed by the projection 35 of the second cabinet Cb in a direction in which force for locking the liquid crystal panel 11 is increased, the liquid crystal panel 11 is more surely locked.

In the second cabinet Cb, since the hot-cathode tubes 50 are attached to the bottom surface 30, it is possible to secure a large distance between the liquid crystal panel 11 and the hot-cathode tubes 50. Therefore, unevenness of the light emitted from the hot-cathode tubes 50 is eliminated and the light is irradiated widely over the entire surface of the liquid crystal panel 11.

In this embodiment, since the first cabinet Ca and the second cabinet Cb configure the outer case that forms the exterior of the liquid crystal display device 10, it is undesirable in design and in safety to arrange a driving power supply board for supplying driving power on the outer side of the first cabinet Ca and the second cabinet Cb. Therefore, the driving power supply board 80 is arranged on the inner side of the second cabinet Cb, to which the hot-cathode tubes 50 are attached, to eliminate problems in design and in safety and realize simplification of wires and the like related to power supply.

The optical sheet 20 for diffusing light from the hot-cathode tubes 50 is held by the first cabinet Ca and the second cabinet Cb. Therefore, it is unnecessary to separately provide a member for attaching the optical sheet 20 in either the cabinet Ca or Cb. As a result, the configuration is simplified.

The projection 35 of the second cabinet Cb housed in the projection housing section 18 of the first cabinet Ca urges the claw sections 13 to the liquid crystal panel 11 side. Therefore, it is possible to make the lock of the liquid crystal panel 11 firmer and it is possible to eliminate a deficiency of misalignment of the liquid crystal panel 11 and shift of the display surface 11a in the frame of the first cabinet Ca.

In the first cabinet Ca, the holding pieces 14 for holding the optical sheet 20 are formed in the same plane. The claw section 13 is formed between the adjacent holding pieces 14, 14 (in plan view). In the second cabinet Cb, the sheets holding section 33 that holds the optical sheet 20 between the sheets holding section 33 and the holding piece 14 is formed. The projection 35 that urges the claw section 13 is formed. Consequently, it is possible to collectively realize locking of the liquid crystal panel 11, holding of the optical sheet 20, and prevention of misalignment of the display panel by the projection. In other words, in the first cabinet Ca, since the claw section 13 that locks the liquid crystal panel 11 is formed between the adjacent holding pieces 14, 14, the holding piece 14 and the claw section 13 (and the projection 35) do not overlap each other. Therefore, it is possible to suitably realize locking of the liquid crystal panel 11 by the claw section 13, holding of the optical sheet by the holding piece 14 and the sheets holding section 33, and prevention of misalignment of the liquid crystal panel 11 by the projection 35.

In this embodiment, the movement of the optical sheet 20 in the surface direction is regulated by the projections 35 provided in the second cabinet Cb in addition to the prevention of misalignment of the liquid crystal panel 11. Therefore, it is unnecessary to separately provide a regulating member for the optical sheet 20, the configuration is simplified, and it is possible to contribute to a cost reduction.

The second cabinet Cb includes the bottom surface 30 to which the hot-cathode tubes 50 are attached. The hot-cathode tubes 50 are localized in the region 30a in a part of the bottom surface 30. In the region 30b (including the wall section 31) different from the region 30a where the hot-cathode tubes 50 are arranged on the inner side of the second cabinet Cb, the driving power supply board 80 for supplying driving power to the hot-cathode tubes 50 is arranged. It is possible to suitably arrange the driving power supply board 80 on the inner side of the second cabinet Cb by arranging the driving power supply board 80 in the region where the hot-cathode tubes 50 are not arranged in this way.

### <Second Embodiment>

A television receiver according to a second embodiment of the present invention is explained.
The television receiver according to the second embodiment is different from the first embodiment in a component for holding the optical sheet 20. Since the other components are generally the same as those of the television receiver TV according to the first embodiment, explanation of the components is omitted.

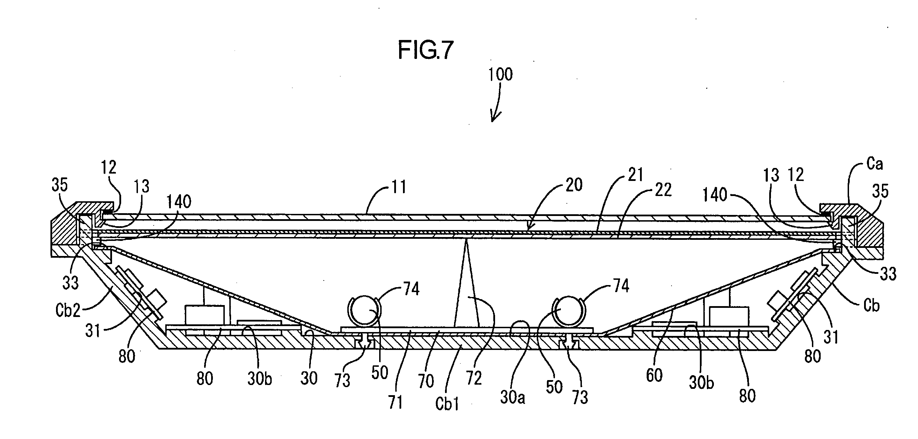

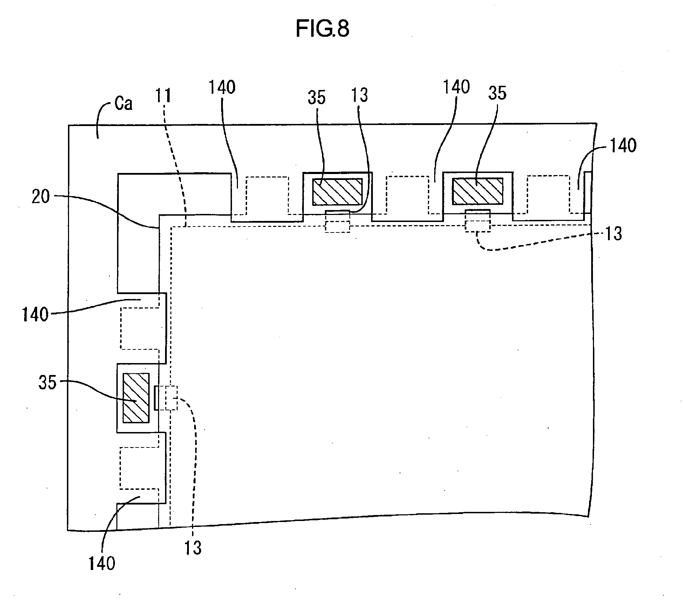

The television receiver TV according to the second embodiment includes a configuration in which a liquid crystal display device 100 shown in FIG. 7 is supported by the stand S (see FIG. 1).
In the liquid crystal display device 100, unlike the liquid crystal display device 10 according to the first embodiment, the optical sheet 20 is held by the first cabinet Ca. Specifically, as shown in FIG. 7, the optical sheet 20 is held between a holding piece 140 and the claw section 13 of the first cabinet Ca. As shown in FIG. 8, the optical sheet 20 is configured to be held in alternate positions in a plane by the holding piece 140 and the claw section 13. In other words, the optical sheet 20 is held in positions shifted in plan view rather than being held in a state in which the holding piece 140 and the claw section 13 overlap in plan view (are opposed to each other).

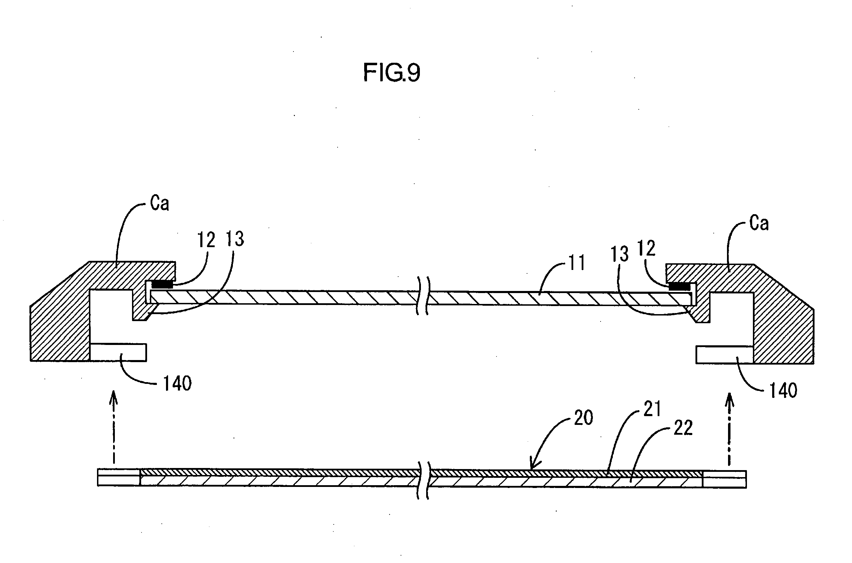

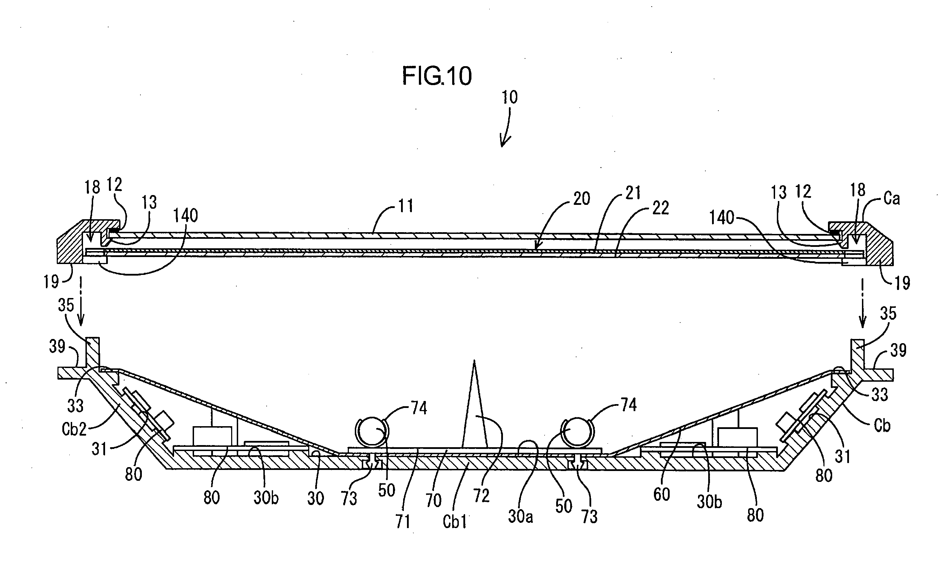

Assembly of the liquid crystal display device 100 having such a configuration is as explained below.
First, as shown in FIG. 9, as in the first embodiment, the liquid crystal panel 11 is locked to the claw section 13. Thereafter, the optical sheet 20 is held between the holding piece 140 and the claw section 13 to complete assembly in the first cabinet Ca. On the other hand, concerning the second cabinet Cb, the circuit board 80, the reflection sheet 60, the hot-cathode tubes 50, and the like are attached to the bottom plate Cb1 or the wall plate Cb2. As shown in FIG. 10, the first cabinet Ca and the second cabinet Cb are assembled with the attachment surfaces 19 and 39 thereof opposed to each other to complete the liquid crystal display device 100.

### <Other embodiments>

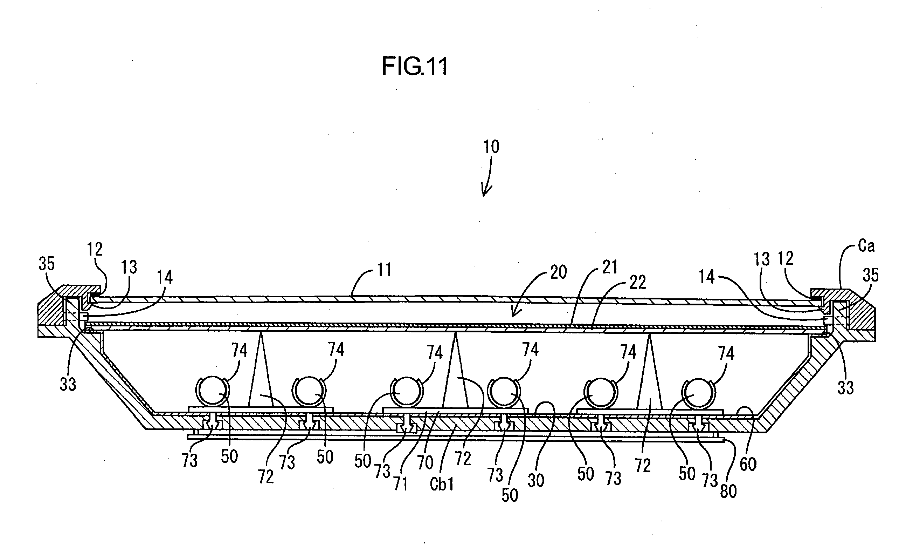

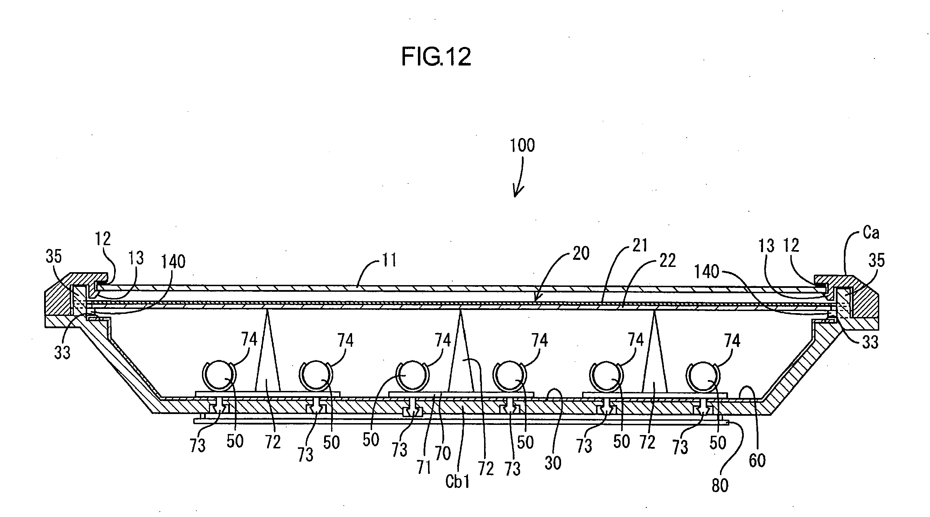

The embodiments of the present invention are explained above. However, the present invention is not limited to the embodiments explained by the description and the drawings. For example, embodiments explained below are also included in the technical scope of the present invention.
(1) In the aforementioned first and second embodiments, the hot-cathode tubes 50 are used as the light source. However, it is also possible to use, for example, cold-cathode tubes as the light source.
(2) In the aforementioned first and second embodiments, the two hot-cathode tubes 50 are arranged to be eccentrically located in the center region 30a of the bottom plate Cb1. However, for example, as shown in FIGS. 11 and 12, the hot-cathode tubes 50 may be arranged over the entire surface of the bottom plate Cb1. In particular, when the cold-cathode tubes are used as the light source, it is preferable to arrange the cold-cathode tubes in parallel over the entire surface of the bottom plate Cb1. In FIG. 11, in the liquid crystal display device 10 according to the first embodiment, the hot-cathode tubes 50 are arranged in parallel in substantially the entire region of the bottom plate Cb1. In FIG. 12, in the liquid crystal display device 100 according to the second embodiment, the hot-cathode tubes 50 are arranged in parallel in substantially the entire region of the bottom plate Cb1.
(3) As shown in FIGS. 11 and 12, when the hot-cathode tubes 50 are arranged in parallel in substantially the entire region of the bottom plate Cb1, a mode of arranging the circuit board 80 on the outer side of the second cabinet Cb can also be adopted. However, in this case, it is preferable to provide an insulative protection cover further on the outer side of the circuit board 80.

### EXPLANATION OF SYMBOLS

10, 100 ... liquid crystal display devices (display devices), 11 ... liquid crystal panel (display panel), 11a ... display surface, 13 ... claw section, 13a ... slope, 13b ... locking surface, 14, 140 ... holding pieces (first holding members), 18 ... projection housing section, 19 ... attachment surface, 20 ... optical sheet, 30 ... bottom surface, 31 ... wall section, 33 ... sheets holding section, 35 ... projection, 39 ... attachment surface, 50 ... hot-cathode tubes (light source), 60 ... reflection sheet, 70 ... lamp clip, 71 ... support pin, TV ... television receiver, Ca ... first cabinet (front side cabinet), Cb ... second cabinet (rear side cabinet)

## Claims

1. A display device comprising:
a light source;
a display panel configured to provide display using light from the light source;
a first cabinet to which the display panel is attached; and
a second cabinet to which the light source is attached,
wherein the first cabinet and the second cabinet are engaged with each other, and the first cabinet and the second cabinet are configured as an outer case that constitutes an exterior of the display device.

2. The display device according to claim 1,
wherein
the first cabinet is a frame, and
the display panel is arranged in such that the display surface thereof is in the frame.

3. The display device according to claim 1 or 2, wherein
the first cabinet includes an elastically deformable claw section, and
the display panel is locked by the claw section.

4. The display device according to any one of claims 1 to 3, wherein
the second cabinet includes a bottom surface and a wall section rising from the bottom surface, and
the light source is attached to the bottom surface.

5. The display device according to any one of claims 1 to 4, further comprising a driving power supply board configured to supply driving power to the light source, the driving power supply board being arranged on an inner side of the second cabinet.

6. The display device according to any one of claims 1 to 5, further comprising an optical sheet configured to diffuse the light from the light source, wherein the optical sheet is held by the first cabinet and the second cabinet.

7. The display device according to any one of claims 1 to 6, wherein
the second cabinet has a projection that projects to the first cabinet side,
the first cabinet has a claw section and a projection housing section that houses the projection, the claw section locking the display panel, the projection housing section being formed on an opposite side of the claw section to a side where the display panel is locked, and
the projection housed in the projection housing section presses the claw section to the display panel side.

8. The display device according to claim 7, further comprising an optical sheet configured to diffuse the light from the light source, wherein
the first cabinet includes a plurality of first holding members that hold the optical sheet, and the claw section, the first holding members being formed in a same plane, the claw section being formed between adjacent ones of the first holding members, and
the second cabinet includes a second holding member that holds the optical sheet between the second holding member and the first holding member.

9. The display device according to claim 8,
wherein the projection regulates movement of the optical sheet in a surface direction.

10. The display device according to any one of claims 1 to 5, further comprising an optical sheet configured to diffuse the light from the light source, wherein the optical sheet is held by the first cabinet.

11. The display device according to any one of claims 1 to 10, further comprising a driving power supply board configured to supply driving power to the light source, wherein
the second cabinet includes a bottom surface to which the light source is attached,
the light source is arranged in one region of the bottom surface, and
the driving power supply board is arranged in another region of the bottom surface different from the region in which the light source is arranged.

12. The display device according to any one of claims 1 to 11, wherein the display panel is a liquid crystal panel including liquid crystals.

13. A television receiver comprising the display device according to any one of claims 1 to 12.
